# FASCICULE DE BREVET EUROPEEN

(11) **EP 2 741 890 B1**
(45) Date de publication et mention de la délivrance du brevet: **17.04.2019**
(21) Numéro de dépôt: 12758560.2
(22) Date de dépôt: 09.08.2012
(51) Int. Cl.: B23P 15/04, B64C 11/20, F01D 5/28, F04D 29/32, F01D 5/14, C23C 24/04

(54) **PROCÉDÉ DE RÉALISATION D'UN RENFORT DE PROTECTION DU BORD D'ATTAQUE D'UNE PALE ET PALE PROT'EGÉE PAR UN TEL RENFORT**
VERFAHREN ZUR HERSTELLUNG EINER SCHUTZVERSTÄRKUNG FÜR DIE VORDERKANTE EINER LEITSCHAUFEL UND DURCH EINE SOLCHE SCHUTZVERSTÄRKUNG GESCHÜTZTE LEITSCHAUFEL
METHOD FOR PRODUCING A PROTECTIVE REINFORCEMENT OF THE LEADING EDGE OF A VANE AND VANE PROTECTED BY SUCH A REINFORCEMENT

(30) Priorité: 10.08.2011 FR 1157278
(43) Date de publication de la demande: 18.06.2014
(73) Titulaire: Safran Aircraft Engines, 75015 Paris (FR)
(72) Inventeur: DUDON, Laurent, Paul, F-77550 Moissy-cramayel Cedex (FR); ARANTES, Antonio, Crémildo, F-77550 Moissy-Cramayel Cedex (FR)
(74) Mandataire: Intès, Didier Gérard André
(86) Numéro de dépôt international: PCT/FR2012/051878
(87) Numéro de publication internationale: WO 2013/021141

(56) Documents cités:
- EP-A1- 1 577 422
- EP-A1- 2 327 812
- EP-A2- 1 217 089
- FR-A1- 2 318 312
- JP-A- 62 165 506
- US-A1- 2002 197 152
- US-A1- 2009 324 401
- US-B1- 7 841 834

## Description

### DOMAINE DE L'INVENTION

L'invention a pour objet un procédé de réalisation d'un renfort de protection du bord d'attaque d'une pale, ainsi qu'une pale protégée par un tel renfort. Il peut s'agir, par exemple, d'une pale d'aube de turbomachine, d'une pale d'hélicoptère ou d'une pale d'hélice.

### ETAT DE LA TECHNIQUE ANTERIEURE

Dans le domaine de l'aéronautique et plus particulièrement celui des turboréacteurs d'avion, diminuer la masse des éléments constitutifs du turboréacteur est une préoccupation constante. Cette préoccupation a conduit au développement d'aubes de soufflante ou de redresseur dont les pales sont réalisées en matériau composite à matrice organique, de telles pales composites étant plus légères que les pales métalliques.

Toutefois, le bord d'attaque de ces pales composites est trop sensible à l'érosion et aux chocs éventuels (oiseaux, graviers, glace, sable, etc.) pour être utilisé sans protection. C'est pourquoi il est connu de protéger ce bord d'attaque à l'aide :
- d'un profilé métallique de renfort, collé sur le bord,
- d'une peinture anti-érosion, appliquée sur le bord,
- d'un film métallique ou plastique anti-érosion, collé sur le bord, ou
- d'une combinaison des protections précitées.

Le document de brevet EP 1577422A1 décrit une structure de protection pour un élément de turbomachine, réalisée en alliage à mémoire de forme.

Quelle que soit la protection retenue, l'adhérence de celle-ci sur le bord d'attaque est un aspect essentiel : il est nécessaire que la protection adhère suffisamment au bord d'attaque pour encaisser les chocs sans se détacher et sans bouger par rapport à celui-ci, et pour répondre aux exigences de durée de vie en fonctionnement normal.

Bien que satisfaisantes, ces protections connues sont jugées trop complexes et/ou trop onéreuses à réaliser. En outre, elles ne permettent pas de réparer (i.e. remettre aux exigences de la réparation une pale usée ou abîmée en service) ou de récupérer (i.e. remettre aux exigences du neuf une pale affichant un défaut lors de la fabrication) une pale.

Il existe donc un besoin pour un renfort de protection qui soit dépourvu, au moins en partie, des inconvénients précités.

### PRESENTATION DE L'INVENTION

L'invention a pour objet un procédé de réalisation d'un renfort pour la protection du bord d'attaque d'une pale, dans lequel le renfort est un revêtement métallique déposé par projection thermique sur le bord d'attaque, selon la revendication 1. Le renfort est ainsi formé par le revêtement métallique déposé.

Par revêtement métallique, on entend désigner un revêtement en métal, en alliage métallique ou en cermet. Avantageusement, il s'agit d'un métal ou d'un alliage suffisamment ductile pour que le revêtement présente de bonnes propriétés d'amortissement des chocs, afin de protéger efficacement le bord d'attaque.

Le revêtement métallique est déposé par projection thermique en compression. La technique de projection thermique en compression est une technique connue consistant à utiliser un procédé de projection thermique grande vitesse (e.g. un procédé « cold spray », HVOF, HVAF, des procédés hybrides, etc.) en réglant les paramètres de projection, en particulier la vitesse de projection des particules métalliques, de manière appropriée pour que le revêtement déposé soit « en compression ». Un revêtement en compression déposé sur une éprouvette plane et déformable, exerce sur l'éprouvette des efforts tels que celle-ci a tendance à devenir convexe côté revêtement.

Grace à la projection thermique en compression il est possible, d'une part, de déposer sur la pale un revêtement métallique (donc un renfort) d'épaisseur importante, typiquement, de l'ordre de plusieurs millimètres et, plus particulièrement, entre 0,5 et 20 mm. De plus, le revêtement déposé étant en compression, il enserre le bord d'attaque de la pale, ce qui améliore encore l'adhérence du renfort sur le bord.

Avant l'étape de projection thermique, on ménage au moins une rainure longitudinale dans la pale, de part et d'autre du bord d'attaque (soit au total au moins deux rainures), le revêtement métallique étant déposé dans ces rainures. Lesdites rainures sont dites « longitudinales » car elles s'étendent dans le sens de la longueur de la pale, comme le bord d'attaque. Lorsque la pale n'est pas droite mais torsadée, lesdites rainures suivent le bord d'attaque curviligne de la pale, en étant elles-mêmes curvilignes.

De telles rainures permettent un encastrement du renfort dans la pale. Cet encastrement améliore encore le maintien du renfort sur le bord d'attaque, en particulier le maintien mécanique en cisaillement. En d'autres termes, ces rainures empêchent le glissement relatif entre le renfort et la pale.

Dans d'autres modes de mise en oeuvre, les rainures sont fabriquées par usinage, après fabrication de l'aube. Cette opération d'usinage présente l'avantage d'être simple à mettre en oeuvre, mais peut entraîner une diminution de la résistance mécanique de la pale.

Dans certains modes de mise en oeuvre, les rainures sont fabriquées par moulage lors de la fabrication de l'aube. Comparativement à l'usinage, cette solution présente l'avantage d'entrainer une moindre diminution de la résistance mécanique de la pale.

Dans certains modes de mise en oeuvre, les rainures ont un profil évasé pour faciliter le dépôt du revêtement métallique au fond de ces rainures.

Dans certains modes de mise en oeuvre, ledit revêtement métallique est en Ni, Al ou Ti, en alliage de base Ni, Co, Al ou Ti, ou en cermet. Par exemple, il peut s'agir :
- d'un alliage de base Ni, de type NiAI, NiCrAl, NiCrAlY et, notamment, un alliage de base Ni comprenant 5 à 20% en poids d'Al, e.g. Ni5Al, NiCr-6Al;
- d'un alliage d'aluminium comprenant au plus 12% en poids de Si ;
- d'un alliage métallique (dit "résistant") de base Ni ou Co fortement chargé en éléments métalliques additionnels, e.g. CoMoCrSi, CoNiCrAIY ;
- d'un cermet fortement chargé (de préférence, au-delà de 12% en poids) en un élément métallique de type Co, Ni, Cu, Al ou en un alliage de ces éléments, e.g. WC12Co, WC17Co ;
- d'un alliage de Ti faiblement allié comme le TA6V.

De tels métaux ou alliages présentent des propriétés mécaniques, notamment une ductilité, avantageuses pour l'application souhaitée.

L'invention a également pour objet une pale ayant un bord d'attaque, ce bord d'attaque étant protégé par un renfort formé par un revêtement métallique déposé par projection thermique en compression sur le bord d'attaque, selon la revendication 6. Le renfort peut également comprendre une sous-couche d'accrochage ou un clinquant interposé entre le bord d'attaque et le revêtement métallique, comme décrit plus loin.

Cette pale étant en matériau composite à matrice organique. Il peut s'agir, par exemple, d'une pale composite obtenue par drapage d'un matériau tissé. Toujours à titre d'exemple, le matériau composite utilisé peut être composé par un assemblage de fibres de carbone/plastique tissées et d'une matrice résineuse (e.g. une matrice de résine époxy, bismaléimide ou cyanate-ester), l'ensemble étant formé par moulage au moyen d'un procédé d'injection de résine sous vide de type RTM (pour « Resin Transfer Molding »).

La pale présente deux rainures longitudinales, de part et d'autre du bord d'attaque, comblées par le revêtement métallique. Le revêtement métallique (donc le renfort) recouvre donc ces rainures.

Dans certains modes de réalisation, ledit revêtement métallique est en Ni, Al ou Ti, ou en alliage de base Ni, Al ou Ti.

Dans certains modes de réalisation, l'épaisseur du renfort est comprise entre 0,5 et 20 mm.

Les caractéristiques et avantages de l'invention précités, ainsi que d'autres, apparaîtront à la lecture de la description détaillée qui suit, d'exemple(s) de réalisation de l'invention. Cette description détaillée fait référence aux dessins annexés.

### BREVE DESCRIPTION DES DESSINS

Les dessins annexés sont schématiques et ne sont pas à l'échelle, ils visent avant tout à illustrer les principes de l'invention.

Sur ces dessins, d'une figure (FIG) à l'autre, des éléments (ou parties d'élément) analogues sont repérés par les mêmes signes de référence.

La FIG 1 est une vue latérale d'une aube dont le bord d'attaque est recouvert d'un renfort de protection.

La FIG 2 est une vue partielle de la pale de la FIG 1, en coupe selon le plan de coupe transversal A-A.

La FIG 3 est une vue analogue à celle de la FIG 2, d'un autre exemple de pale.

La FIG 4 est une vue analogue à celle de la FIG 2, d'un autre exemple de pale.

La FIG 5 est une vue analogue à celle de la FIG 2, d'un autre exemple de pale.

La FIG 6 est une vue analogue à celle de la FIG 2, d'un autre exemple de pale.

La FIG 7 est une vue analogue à celle de la FIG 2, d'un autre exemple de pale.

### DESCRIPTION DETAILLEE D'EXEMPLES DE REALISATION

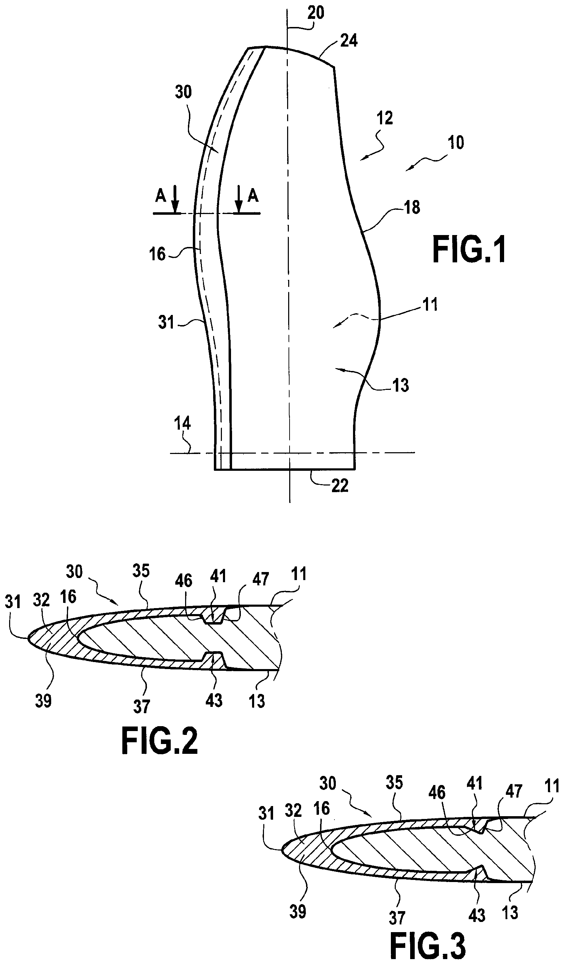

Les FIGS 1 et 2 représentent une pale 12 d'aube 10 de turbomachine. Il s'agit d'une aube mobile de soufflante de turboréacteur d'avion.

La pale 12 est la partie de l'aube 10 destinée à être située dans le flux d'air traversant le turboréacteur. L'amont et l'aval sont définis par rapport au sens d'écoulement normal de ce flux.

La pale 12 définit la surface aérodynamique de l'aube et s'étend selon une première direction axiale 14 (en référence à l'axe de rotation de l'aube 10) entre un bord d'attaque 16 et un bord de fuite 18, et selon une deuxième direction radiale 20 (correspondant à la direction longitudinale de la pale 12) entre un pied 22 et un sommet 24. L'aube 10 est fixée par son pied 22 à un disque porteur rotatif, commun à plusieurs aubes.

Les faces d'extrados 13 et d'intrados 11 sont les faces latérales de la pale 12 qui relient le bord d'attaque 16 au bord de fuite 18.

Le bord d'attaque 16 est recouvert par un renfort de protection 30. Ce renfort 30 épouse la forme du bord d'attaque 16 qu'il prolonge pour former le bord d'attaque 31 du renfort.

Le renfort de protection 30 présente une section sensiblement en forme de U et est positionné à cheval sur le bord d'attaque 16. Ce renfort présente une base 39 qui est la zone de plus grande épaisseur (comprise par exemple entre 10 et 20 mm) du renfort et qui définit le bord d'attaque 31 du renfort. Cette base 39 est prolongée par deux flancs latéraux 35 et 37 situés respectivement du côté d'intrados et d'extrados de l'aube 10. Les flancs 35, 37 présentent, en section transversale (voir FIG 2), un profil qui d'abord s'amincit en direction du bord de fuite 18, puis s'épaissit au niveau des portions d'extrémités des flancs.

Le renfort de protection 30 est réalisé en déposant un revêtement métallique 32 par projection thermique en compression sur le bord d'attaque 16.

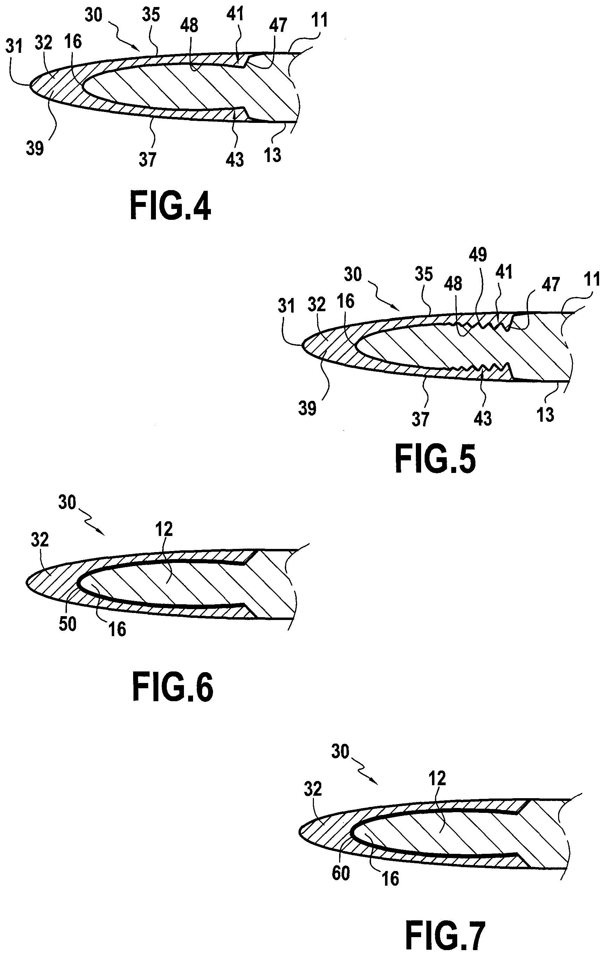

Une sous-couche 50 d'accrochage (voir FIG 6) peut être déposée sur le bord d'attaque 16, préalablement au dépôt du revêtement métallique 32. Cette sous-couche 50 d'accrochage peut être constituée, par exemple, d'un alliage Ni, Al, Cu, Co, peu chargé en autres éléments (<15% en poids). Cette sous-couche d'accrochage est projetée, par exemple, par projection plasma ou par projection à la flamme. Une fois la sous-couche 50 d'accrochage déposée, la projection thermique du revêtement 32 sur cette sous-couche 50 est réalisée.

La projection thermique de la sous-couche 50 d'accrochage peut être effectuée suivant des paramètres basse vitesse : la projection à la flamme est intrinsèquement basse vitesse, tandis qu'en projection plasma, le volume de gaz Ar+H2 est choisi inférieur ou égal à 40 litres/minute. Par ailleurs, un ou plusieurs des paramètres suivants peuvent être retenus pour la projection thermique de la sous-couche:
- épaisseurs de sous-couche entre 0,05 et 0,25 mm ;
- pièce maintenue aussi froide que possible (e.g. température du bord d'attaque, à 0,5 mm de profondeur de la surface, inférieure au point de transition vitreuse du plastique, d'au moins 10°C) ;
- faible débit massique de poudre (e.g. <40g/mn);
- fort soufflage de refroidissement (ou même soufflage cryogénique)
- vitesse de déplacement du pistolet de projection rapide (e.g. 60 à 120 m/minute).

A titre d'exemple, le revêtement métallique 32 est en un matériau choisi parmi: un alliage de base nickel, un cermet et un alliage métallique résistant de base nickel ou cobalt. Le revêtement métallique 32 est obtenu en projetant ledit matériau à l'aide d'un appareil de projection HVOF, HVAF ou Cold Spray paramétré de manière à produire un revêtement en compression.

Un test de projection HVOF, HVAF ou Cold Spray sur une éprouvette "Almen" peut être réalisé pour sélectionner les meilleurs matériaux pour le revêtement métallique 32. Les matériaux retenus sont, de préférence, ceux répondant aux trois critères suivants:
- le revêtement déposé met l'éprouvette "Almen" en compression;
- le dépôt du revêtement peut être monté jusqu'à une épaisseur supérieure à 1mm sans qu'on observe de décollement;
- un thermocouple placé au dos de l'éprouvette montre que sa température ne dépasse pas 150°C lors du dépôt.

En outre, le niveau de compression du revêtement peut être contrôlé à l'aide d'une éprouvette dite "Almen" (test selon la norme NFL 06-832C) pour une épaisseur de revêtement fixée, typiquement 0,5 mm. La valeur de la flèche Almen est de préférence supérieure à F5N.

La projection thermique en compression du revêtement métallique 32 peut être effectuée comme suit.
Par exemple, pour une projection cold spray:
- vitesse de projection supérieure à 1 Mach,
- températures de gaz comprises entre 200 et 1000°C,
- débits massiques de poudre compris entre 10 et 80 g/minute,
- pression de chambre supérieure à 40 bars.
Par exemple, pour une projection HVOF:
- gaz : Kérosène/Oxygène ou Hydrogène/Oxygène,
- débits massiques de poudre entre 10 et 80 g/minute,
- appareillage HP HVOF avec des pressions de chambre supérieures à 8 bars,
- refroidissement cryogénique (azote ou CO2 liquide ou CO2 en "pellet" (boulette)), directement sur le revêtement,
- soufflages complémentaires maintenant la pièce en dessous de 150°C.
Par exemple, pour une projection HVAF:
- gaz : Kérosène/Oxygène ou Hydrogène/Oxygène
- débits massiques de poudre entre 10 et 80g/minute,
- appareillage HP HVAF avec des pressions de chambre supérieures à 8 bars,
- refroidissement cryogénique (Azote ou CO2 liquide ou CO2 en "pellet"), directement sur le revêtement.

Avant projection thermique du revêtement 32 ou de la sous-couche 50, il peut être préférable de préparer la surface du bord d'attaque 16 de la pale 12. C'est par exemple le cas lorsque la pale 12 est composée de fibres de carbone tricotées et d'un liant plastique injecté (le plus souvent de la résine époxy). En effet, lors du tricotage, les fibres de carbone s'imbriquent en laissant un minimum d'espace. A la surface, cette imbrication est rompue et le liant plastique injecté bouche la rugosité résiduelle. Ce faisant le bord d'attaque 16 affiche une proportion plastique/fibres plus importante en surface qu'à coeur. L'adhérence du revêtement 32 ou de la sous-couche étant généralement meilleures sur les fibres que sur le plastique, la préparation peut consister à écrouter mécaniquement la surface du bord d'attaque 16 afin d'enlever l'excès de plastique. Le plus souvent, cet écroutage ne dépasse pas 0,1 à 0,2 mm (si le moulage de la pale 12 a été correctement effectué).

Dans certains cas, l'écroutage n'est toutefois pas possible, par exemple parce qu'il risque de diminuer la résistance mécanique de la pièce/zone considérée (cas des pièces/zones très chargées mécaniquement) et/ou parce que la pièce/zone considérée est trop petite pour subir une perte de matière. Dans ces cas, la sous-couche 50 d'accrochage peut-être remplacée par un clinquant 60 (voir FIG 7) de faible épaisseur, e.g. 0,02 à 0,4 mm. Le clinquant 60 est fixé sur le bord d'attaque 16, par exemple, par collage. Le collage du cliquant peut s'effectuer lors du moulage de la pièce ou après le moulage de la pièce. Le cliquant 60 peut-être ajouré de micro-perçages pour améliorer le collage. Une fois le clinquant 60 collé, la projection thermique du revêtement 32 sur le clinquant 60 est réalisée.

La sous-couche 50 ou le clinquant 60 peuvent être métalliques, de manière à se trouver dans une configuration de projection sur substrat métallique, pour la projection du revêtement 32.

Comme représenté sur la FIG 2, la pale 12 peut présenter une rainure longitudinale 41, 43 de part et d'autre du bord d'attaque 16 (i.e. une première rainure d'un côté du bord d'attaque et une deuxième rainure de l'autre côté). Ces deux rainures longitudinales 41, 43 se situent respectivement du côté d'intrados 11 et d'extrados 13. Le revêtement métallique est déposé dans ces rainures 41, 43, de sorte que ces rainures sont recouvertes par le renfort 30.

Les flancs 35, 37 présentent leur épaisseur maximum au niveau des rainures 41, 43, et leur épaisseur minimum en amont des rainures. Ces rainures 41, 43, permettent un encastrement du renfort 30 dans la pale 12.

Plusieurs profils peuvent être envisagés pour les rainures 41, 43. Les FIGS 2 à 5 représentent différents exemples de profils possibles. Du côté aval (i.e. du côté du bord de fuite 18), les rainures 41, 43 sont délimitées par un décrochement 47 dans les faces latérales de la pale 12, ce décrochement 47 formant butée pour le renfort 30 lors d'un choc et évitant ainsi le glissement du renfort 30 sur la pale 12. Du côté amont (i.e. du côté du bord d'attaque 16), les rainures 41, 43 sont délimitées par un décrochement 46 dans les faces latérales de la pale 12, comme dans les exemples des FIGS 2 et 3 ou, au contraire, peuvent être délimitées par une pente douce 48, comme dans l'exemple de la FIG 4. L'exemple de la FIG 5 diffère de celui de la FIG 4 en ce qu'une série de cannelures longitudinales 49 sont formées sur la pente douce 48 en amont des rainures 41, 43.

Dans tous ces exemples, les rainures 41, 43 présentent un profil évasé de sorte que le revêtement métallique peut être déposé facilement au fond de ces rainures, même lorsque l'angle de la projection thermique n'est pas de 90° (ce qui correspond à une projection orthogonale à la surface). Typiquement, les profils de rainure représentés permettent de réaliser une projection selon un angle compris entre 45 et 90°.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

## Revendications

1. Procédé de réalisation d'un renfort de protection (30) du bord d'attaque (16) d'une pale (12), dans lequel le renfort (30) est réalisé en déposant un revêtement métallique (32) par projection thermique en compression sur le bord d'attaque (16), **caractérisé par** :
avant l'étape de projection thermique en compression, on ménage au moins une rainure (41, 43) longitudinale dans la pale (12), de part et d'autre du bord d'attaque (16), le revêtement métallique étant déposé dans ces rainures (41, 43),
le renfort de protection (30) présentant une section sensiblement en forme de U et étant positionné à cheval sur le bord d'attaque (16), le renfort présentant une base (39) qui est une zone de plus grande épaisseur du renfort et qui définit un bord d'attaque (31) du renfort, la base (39) étant prolongée par deux flancs latéraux (35, 37) situés respectivement du côté d'intrados et d'extrados de la pale (12),
cette pale (12) est en matériau composite à matrice organique et les flancs (35, 37) présentent, en section transversale, un profil qui d'abord s'amincit en direction du bord de fuite (18), puis s'épaissit au niveau des portions d'extrémités des flancs.

2. Procédé selon la revendication 1, dans lequel ledit revêtement métallique est en Ni, Al ou Ti, ou en alliage de base Ni, Co, Al ou Ti, ou en cermet.

3. Procédé selon l'une quelconque des revendications 1 à 2, dans lequel l'épaisseur du renfort (30) est comprise entre 0,5 et 20 mm.

4. Procédé selon l'une quelconque des revendications 1 à 3, dans lequel on dépose une sous-couche (50) d'accrochage sur le bord d'attaque (16), préalablement au dépôt du revêtement métallique (32).

5. Procédé selon l'une quelconque des revendications 1 à 3, dans lequel on fixe un clinquant (60) sur le bord d'attaque (16), préalablement au dépôt du revêtement métallique (32).

6. Pale ayant un bord d'attaque, ce bord d'attaque (16) étant protégé par un renfort (30) formé par un revêtement métallique déposé par projection thermique en compression sur le bord d'attaque (16), **caractérisé par** :
la pale présentant au moins une rainure longitudinale (41, 43), de part et d'autre du bord d'attaque (16), ces rainures étant comblées par le revêtement métallique,
le renfort de protection (30) présentant une section sensiblement en forme de U et étant positionné à cheval sur le bord d'attaque (16), le renfort présentant une base (39) qui est une zone de plus grande épaisseur du renfort et qui définit un bord d'attaque (31) du renfort, la base (39) étant prolongée par deux flancs latéraux (35, 37) situés respectivement du côté d'intrados et d'extrados de la pale (12),
cette pale (12) est en matériau composite à matrice organique et les flancs (35, 37) présentent, en section transversale, un profil qui d'abord s'amincit en direction du bord de fuite (18), puis s'épaissit au niveau des portions d'extrémités des flancs.

7. Pale selon la revendication 6, cette pale (12) étant une pale d'aube de turbomachine, une pale d'hélicoptère ou d'hélice.

8. Pale selon l'une quelconque des revendications 6 à 7, dans lequel ledit revêtement métallique (32) est en Ni, Al ou Ti, ou en alliage de base Ni, Co, Al ou Ti, ou en cermet.

9. Pale selon l'une quelconque des revendications 6 à 8, dans lequel l'épaisseur du renfort (30) est comprise entre 0,5 et 20 mm.

## Patentansprüche

1. Verfahren zur Herstellung einer Schutzverstärkung (30) der Vorderkante (16) einer Schaufel (12), wobei die Verstärkung (30) hergestellt wird, indem eine Metallbeschichtung (32) durch thermisches Spritzen unter Kompression auf der Vorderkante (16) abgeschieden wird,
**dadurch gekennzeichnet, dass**:
vor dem Schritt des thermischen Spritzens unter Kompression zumindest eine Längsnut (41, 43) in die Schaufel (12) eingebracht wird, auf beiden Seiten der Vorderkante (16), wobei die Metallbeschichtung in diesen Nuten (41, 43) abgeschieden wird,
wobei die Schutzverstärkung (30) einen Querschnitt im Wesentlichen in U-Form aufweist und rittlings über der Vorderkante (16) positioniert ist, wobei die Verstärkung eine Basis (39) aufweist, die eine Zone größerer Dicke der Verstärkung ist, und die eine Vorderkante (31) der Verstärkung definiert, wobei die Basis (39) durch zwei Seitenteile (35, 37) verlängert wird, die sich jeweils auf der Bauchseite und der Rückenseite der Schaufel (12) befinden,
wobei diese Schaufel (12) aus einem Verbundmaterial mit organischer Matrix besteht und die Seitenteile (35, 37) im Querschnitt ein Profil aufweisen, das sich zuerst in Richtung zur Hinterkante (18) verjüngt und sich dann im Bereich der Endabschnitte der Seitenteile verdickt.

2. Verfahren nach Anspruch 1, wobei die Metallbeschichtung aus Ni, AI oder Ti, oder aus einer Legierung auf Ni-, Co-, AI- oder Ti-Basis, oder aus Cermet besteht.

3. Verfahren nach einem der Ansprüche 1 bis 2, wobei die Dicke der Verstärkung (30) zwischen 0,5 und 20 mm beträgt.

4. Verfahren nach einem der Ansprüche 1 bis 3, wobei eine Unterschicht (50) zur Haftvermittlung auf der Vorderkante (16), vor der Abscheidung der Metallbeschichtung (32), abgeschieden wird.

5. Verfahren nach einem der Ansprüche 1 bis 3, wobei eine Metallfolie (60) auf der Vorderkante (16), vor der Abscheidung der Metallbeschichtung (32), fixiert wird.

6. Schaufel mit einer Vorderkante, wobei diese Vorderkante (16) durch eine Verstärkung (30) geschützt wird, die aus einer Metallbeschichtung gebildet wird, die durch thermisches Spritzen unter Kompression auf der Vorderkante (16) abgeschieden wird,
**dadurch gekennzeichnet, dass**:
die Schaufel zumindest eine Längsnut (41, 43) auf beiden Seiten der Vorderkante (16) aufweist, wobei die Nuten durch die Metallbeschichtung ausgefüllt werden,
wobei die Schutzverstärkung (30) einen Querschnitt im Wesentlichen in U-Form aufweist und rittlings über der Vorderkante (16) positioniert ist, wobei die Verstärkung eine Basis (39) aufweist, die eine Zone größerer Dicke der Verstärkung ist, und die eine Vorderkante (31) der Verstärkung definiert, wobei die Basis (39) durch zwei Seitenteile (35, 37) verlängert wird, die sich jeweils auf der Bauchseite und der Rückenseite der Schaufel (12) befinden,
wobei diese Schaufel (12) aus einem Verbundmaterial mit organischer Matrix besteht und die Seitenteile (35, 37) im Querschnitt ein Profil aufweisen, das sich zuerst in Richtung zur Hinterkante (18) verjüngt und sich dann im Bereich der Endabschnitte der Seitenteile verdickt.

7. Schaufel nach Anspruch 6, wobei diese Schaufel (12) eine Radschaufel einer Turbomaschine, eine Helikopter- oder eine Propellerschaufel ist.

8. Schaufel nach einem der Ansprüche 6 bis 7, wobei die Metallbeschichtung (32) aus Ni, AI oder Ti, oder aus einer Legierung auf Ni-, Co-, AI- oder Ti-Basis, oder aus Cermet besteht.

9. Schaufel nach einem der Ansprüche 6 bis 8, wobei die Dicke der Verstärkung (30) zwischen 0,5 und 20 mm beträgt.

## Claims

1. A method of making a reinforcement (30) for protecting a leading edge (16) of a blade (12), the method being **characterized in that** the reinforcement (30) is made by depositing a metal coating (32) on the leading edge (16) by thermal spraying in compression, **characterized in that**
prior to the thermal spraying in compression step, at least one longitudinal groove (41, 43) is formed in the blade (12) on either side of the leading edge (16), with the metal coating being deposited in these grooves (41, 43),
the reinforcement (30) presenting a section that is substantially U-shaped and positioned astride the leading edge (16), the reinforcement (30) having a base (39), which is the zone of greatest thickness of the reinforcement and which defines the leading edge (31) of the reinforcement, the base (39) being extended by two side flanges (35, 37) situated respectively on the pressure side and on the suction side of the blade (12), the blade (12) being made of organic matrix composite material and, in cross-section, the flanges (35, 37) present a profile that begins by tapering going towards the trailing edge (18) and that then becomes thicker towards the end portions of the flanges.

2. A method according to claim 1, wherein said metal coating is made of Ni, Al, or Ti, or of an alloy based on Ni, Co, Al, or Ti, or of cermet.

3. A method according to any one of claims 1 to 2, wherein the reinforcement (30) has a thickness lying in the range 0.5 mm to 20 mm.

4. A method according to any one of claims 1 to 3, wherein a bonding underlayer (50) is deposited on the leading edge (16) prior to depositing the metal coating (32).

5. A method according to any one of claims 1 to 3, wherein a metal foil (60) is fastened onto the leading edge (16) prior to depositing the metal coating (32).

6. A blade having a leading edge, the leading edge (16) being protected by a reinforcement (30) formed by a metal coating deposited on the leading edge (16) by thermal spraying in compression, **characterized in that**
the blade presents at least one longitudinal groove (41, 43) on either side of the leading edge (16), with the metal coating being deposited in these grooves (41, 43),
the reinforcement (30) presents a section that is substantially U-shaped and positioned astride the leading edge (16), the reinforcement (30) having a base (39), which is the zone of greatest thickness of the reinforcement and which defines the leading edge (31) of the reinforcement, the base (39) being extended by two side flanges (35, 37) situated respectively on the pressure side and on the suction side of the blade (12), the blade (12) being made of organic matrix composite material and, in cross-section, the flanges (35, 37) present a profile that begins by tapering going towards the trailing edge (18) and that then becomes thicker towards the end portions of the flanges.

7. A blade according to claim 6, the blade (12) being a blade of a turbine engine, a helicopter, or a propeller.

8. A blade according to any one of claims 6 to 7, wherein said metal coating (32) is made of Ni, Al, or Ti, or of an alloy based on Ni, Co, Al, or Ti, or of cermet.

9. A blade according to any one of claims 6 to 8, wherein the reinforcement (30) has a thickness lying in the range 0.5 mm to 20 mm.
